# EUROPÄISCHE PATENTSCHRIFT

(11) **EP 2 147 061 B1**
(45) Veröffentlichungstag und Bekanntmachung des Hinweises auf die Patenterteilung: **18.11.2015**
(21) Anmeldenummer: 08749216.1
(22) Anmeldetag: 29.04.2008
(51) Int. Cl.: C09D 4/00

(54) **NICHTIONISCHE WASSERLÖSLICHE ADDITIVE**
NON-IONIC WATER-SOLUBLE ADDITIVES
ADDITIFS HYDROSOLUBLES NON IONIQUES

(30) Priorität: 10.05.2007 DE 102007021868
(43) Veröffentlichungstag der Anmeldung: 27.01.2010
(73) Patentinhaber: CLARIANT INTERNATIONAL LTD, 4132 Muttenz (CH)
(72) Erfinder: FECHNER, Björn, 65817 Eppstein (DE); SCHAEFER, Carsten, 84453 Mühldorf am Inn (DE); WÖRNDLE, Alexander, 60313 Frankfurt am Main (DE)
(74) Vertreter: Mikulecky, Klaus
(86) Internationale Anmeldenummer: PCT/EP2008/003455
(87) Internationale Veröffentlichungsnummer: WO 2008/138485

(56) Entgegenhaltungen:
- DE-A1-102004 042 799
- DE-A1-102006 049 804
- US-A- 5 484 851
- US-B1- 6 511 952
- US-B1- 6 582 510

## Beschreibung

Gegenstand der vorliegenden Erfindung sind neuartige nichtionische Copolymere, die als Dispergiermittel für wasserbasierende Pigmentpräparationen verwendet werden, und ein Verfahren zur Herstellung dieser Copolymere.

Für die Dispergierung von Pigmenten im flüssigen Medium sind üblicherweise Dispergiermittel notwendig. Diese Dispergiermittel, unterstützt durch geeignete Tenside, auch Benetzer genannt, fördern als oberflächenaktive Mittel die Benetzung der zu dispergierenden Pigmente und erleichtern das Aufbrechen von Agglomeraten und Aggregaten bei der Herstellung der Pigmentdispersion, welches in der Regel mit Hilfe einer Mahlung bewerkstelligt wird, um hohe mechanische Kräfte in das System einzutragen. Dispergiermittel können anionischer, kationischer, amphoterer oder neutraler Struktur sein. Sie können niedermolekularer Natur sein oder höhermolekulare Polymere darstellen, die eine statistische, alternierende, blockartige, kammartige oder sternförmig angeordnete Architektur der polymerisierten Monomere ausbilden. Von besonderer kommerzieller Bedeutung sind Dispergiermittel beispielsweise für die Dispergierung von Pigmenten bei der Herstellung von Pigmentkonzentraten, die zum Einfärben von Dispersions- und Lackfarben, Anstrichmitteln, Beschichtungsstoffen und Druckfarben verwendet werden, sowie zum Einfärben von Papier, Kartonagen und Textilien.

Kammpolymere werden meist unter Verwendung von Makromonomeren auf Basis von Mono(meth)acrylsäureestern als Comonomere hergestellt und unterscheiden sich von anderen polymeren Dispergiermitteln dadurch, dass sie eine klar geordnete Struktur aufweisen, da Hydrophobie und Hydrophilie bzw. Polarität auf die Haupt- und die Seitenketten aufgeteilt werden kann.

In EP 1 293 523 wird ein Dispergiermittel beschrieben, welches ein Polymer ist, das ein gewichtsgemitteltes Molekülgewicht von etwa 5.000 bis 100.000 aufweist und 20 bis 80 Gew.-% eines hydrophilen Rückgrats und 80 bis 20 Gew.-% makromonomerer Seitenketten umfasst. Das Rückgrat besteht, bezogen auf das Gewicht des Rückgrats, zu 70 bis 98 Gew.-% aus polymerisierten ethylenisch ungesättigten Monomeren, die keine Carboxylgruppen enthalten, sowie zu 2 bis 30 Gew.-% aus polymerisierten ethylenisch ungesättigten Monomeren, die eine Carboxylgruppe tragen, wobei zumindest 10 % der Carboxylgruppen mit einem Amin oder einer anorganischen Base neutralisiert sind. Das Rückgrat weist im Vergleich zu den Seitenketten hydrophile Eigenschaften auf. Die Seitenketten bestehen aus Makromonomeren polymerisierter ethylenisch ungesättigter Monomere.

In EP 1 081 169 werden verzweigte Polymere beschrieben, die sich aus folgender Monomerenmischung ableiten:
(A) 50 bis 93 Gew.-% wenigstens eines ethylenisch ungesättigten Monomers,
(B) 2 bis 25 Gew.-% wenigstens eines ethylenisch ungesättigten Makromonomers mit einem Molekülgewicht von 1.000 bis 20.000, und
(C) 5 bis 25 Gew.-% wenigstens eines polymerisierbaren Imidazolderivats.

EP 1 562 696 beschreibt in wässriger Emulsionspolymerisation hergestellte polymere Dispergiermittel, welche mit Makromonomeren synthetisiert werden, die aus Polyalkylenglykol-Mono(meth)acrylaten bestehen. Die Hauptkette des Polymers muss ethylenisch ungesättigte Monomere mit mindestens einer Aminogruppe enthalten.

In DE 10 2005 019 384 (WO 2006 114303 A1) werden Kammpolymere beschrieben, die aus ethylenisch ungesättigten Monomeren wie Alkyl(meth)acrylaten und Aryl(meth)acrylaten in Kombination mit einem reinen Polyethylenglykol-Mono(meth)acrylat synthetisiert werden, und als Dispergiermittel verwendet werden.

US-A-5 484 851 beschreibt Polyvinyl-Polyoxyalkylen-Blockcopolymere, die dadurch hergestellt werden, dass zunächst ein A-Block aus Vinylmonomeren polymerisiert wird und anschließend Alkylenoxid zugesetzt wird.

US-B1-6 582 510 und US-B1-6 511 952 beschreiben Acrylsäure-Polyether-Kammpolymere, wobei die Polyetherkette aus C₂-C₄-Epoxiden gebildet wird.

DE 10 2004 042799 A1 beschreibt Poly-(C₂-C₄-alkylenglykol)-mono(meth)acrylsäureester und Copolymerisate mit weiteren ungesättigten Carbonsäuren, die als Mittel zu Betonverflüssigung eingesetzt werden.

DE 10 2006 049804 A1 beschreibt ein Verfahren zur Herstellung von wasserlöslichen Blockalkoxylaten alpha, beta- ethylenisch ungesättigter Mono- oder Dicarbonsäuren.

Keines der in den oben genannten Schriften dargelegten polymeren Dispergiermittel ist jedoch in der Lage, gleichzeitig das an nichtionische Novolak-Dispergiermittel gestellte Anforderungsprofil zu erfüllen:
(i) Organische Pigmente in hoher Konzentration über 40 Gew.-% niederviskos zu dispergieren;
(ii) Dispersionen von hoher und reproduzierbarer Farbstärke zu bilden;
(iii) Vermeidung einer Reagglomeration der Pigmentteilchen;
(iv) Breite Verträglichkeit und Schaumfreiheit der Dispersionen. Meistens werden Dispersionen während einer 4-wöchigen Lagerung bei 50 °C fest.

Die bisher gebräuchlichen Novolakdispergiermittel enthalten jedoch als Folge ihrer Herstellung Reste von Alkylphenolen, häufig Nonylphenol, und deren Ethoxylaten. Da Alkylphenolethoxylate bzw. deren Abbauprodukte in der Umwelt kaum abgebaut werden, reichern sie sich an. Dies ist problematisch, da sie auf Wasserorganismen eine hormonelle Wirkung zeigen. Daher wurden in vielen Ländern Rechtsvorschriften erlassen (z. B. 2003/53/EC), die den Einsatz von Stoffen, die Alkylphenole bzw. ihre Ethoxylate enthalten, in offenen Stoffkreisläufen beschränken bzw. verbieten.

Bisherige Untersuchungen haben gezeigt, dass es nach wie vor außerordentlich schwierig ist, Dispergiermittel zu synthetisieren, die nichtionischen Novolaksystemen äquivalent sind. Gefordert sind demnach neue Dispergiermittel, die organische Pigmente in hoher Konzentration von über 40 % niederviskos dispergieren können. Die Dispersionen müssen leicht herstellbar sein, d .h. die Pigmente müssen leicht benetzbar und leicht ins wässrige Medium einarbeitbar sein. Die Dispersion muss eine hohe und reproduzierbare Farbstärke aufweisen und diese über einen Zeitraum von mehreren Jahren stabil halten. Ebenfalls sollten alle weiteren coloristischen Parameter wie z. B. der Bunttonwinkel und die Reinheit reproduzierbar und stabil sein. Weiterhin muss die Dispersion über eine niedrige Viskosität verfügen; die Pigmente dürfen weder agglomerieren noch flockulieren, noch dürfen sie aufschwimmen oder sedimentieren. Die Dispersion sollte nicht schäumen bzw. keine Schaumbildung im Anwendungsmedium verursachen oder beschleunigen. Ferner sollten die Dispergiermittel zu einer breiten Verträglichkeit der Dispersionen in verschiedenen Anwendungsmedien beitragen. Zudem muss die Dispersion scherstabil sein, d. h. es darf sich unter Scherung nicht die Farbstärke oder Coloristik ändern und die Dispersion muss unter diesen Bedingungen flockulationsstabil bleiben.

Überraschenderweise wurde gefunden, dass spezielle nichtionische Kammcopolymere, die mit Hilfe von Makromonomeren aus Polyethylen/Polypropylenglykol-Mono(meth)acrylsäureestern hergestellt werden, diese Aufgabe erfüllen.

Gegenstand der Erfindung sind daher Copolymere, gemäß Ansprüche 1 bis 8 erhältlich durch Polymerisation der Monomere (A), (B) und (C), wobei
(A) ein Monomer der Formel (I) 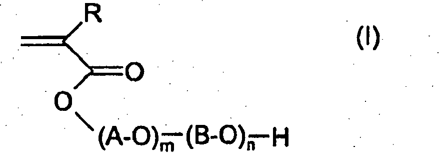 wobei
   - A: für C₂- bis C₄-Alkylen und
   - B: für ein von A unterschiedliches C₂- bis C₄-Alkylen steht,
   - R: für Wasserstoff oder Methyl steht,
   - m: eine Zahl von 1 bis 500, vorzugsweise 1 bis 50, ist;
   - n: eine Zahl von 1 bis 500, vorzugsweise 1 bis 50, ist,
   wobei die Summe m + n gleich 2 bis 1.000 ist;
(B) ein ethylenisch ungesättigtes Monomer ist, das eine aromatische Gruppe enthält; und
(C) ein ethylenisch ungesättigtes Monomer ist, das einen Alkylrest enthält,
wobei das Monomer (B) eine Verbindung der Formel (IIa) oder Formel (IIb) ist: 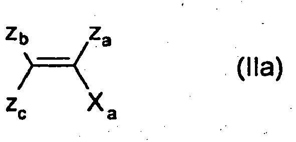 wobei
- Xₐ: für einen aromatischen öder araliphatischen Rest mit 3 bis 30 C-Atomen steht, der gegebenenfalls eines oder mehrere der Heteroatome N, O und S enthält,
- Zₐ: für H oder (C₁-C₄)-Alkyl steht,
- Z_{b}: für H oder (C₁-C₄)-Alkyl steht, und
- Z_{c}: für H oder (C₁-C₄)-Alkyl steht; 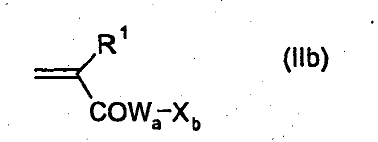
wobei
- R¹: für Wasserstoff oder Methyl steht,
- X_{b}: für einen aromatischen oder araliphatischen Rest mit 3 bis 30 C-Atomen steht, der gegebenenfalls eines oder mehrere der Heteroatome N, O und S enthält,
- Wₐ: für Sauerstoff oder die Gruppe NH steht;
und wobei das Monomer (C) eine Verbindung der Formel (III) ist : 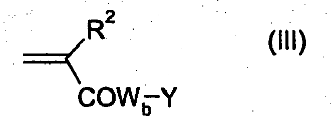 wobei
- R²: für Wasserstoff oder Methyl steht,
- Y: für einen aliphatischen Kohlenwasserstoffrest mit 6 bis 30, insbesondere 9 bis 20 C-Atomen, steht, der linear oder verzweigt, oder auch cyclisch sein kann, und die Heteroatome O, N und/oder S enthalten kann und auch ungesättigt sein kann,
- W_{b}: für Sauerstoff oder die Gruppe NH steht.

Das erfindungsgemäße Copolymer besitzt übliche endständige Gruppen, welche durch die Initiierung der radikalischen Polymerisation oder durch Kettenübertragungsreaktionen oder durch Kettenabbruchreaktionen entstehen, beispielsweise ein Proton, eine Gruppe aus einem Radikalinitiator oder eine schwefelhaltige Gruppe aus einem Kettenübertragungsreagenz.

Der molare Anteil der Monomere beträgt bevorzugt 1 bis 80 % für das Monomer (A), 0,1 bis 80 % für das Monomer (B), und 0,1 bis 80 % für das Monomer (C). Besonders bevorzugt liegt der molare Anteil der Monomere bei 10 bis 70 % für Monomer (A), bei 10 bis 60 % für Monomer (B) und bei 10 bis 60 % für Monomer (C).

Die Alkylenoxideinheiten (A-O)ₘ und (B-O)ₙ können entweder statistisch oder wie im Falle einer bevorzugten Ausführungsform blockartig angeordnet vorliegen.

In einer bevorzugten Ausführungsform steht (A-O)ₘ für Propylenoxid-Einheiten und (B-O)ₙ für Ethylenoxid-Einheiten, oder (A-O)ₘ für Ethylenoxid-Einheiten und (B-O)ₙ für Propylenoxid-Einheiten, wobei der molare Anteil der Ethylenoxid-Einheiten bevorzugt 50 bis 98 %, insbesondere 60 bis 95 %, besonders bevorzugt 70 bis 95 %, bezogen auf die Summe (100 %) der Ethylenoxid- und Propylenoxid-Einheiten, beträgt.

Die Summe der Alkylenoxideinheiten kann prinzipiell n + m = 2 bis 1.000 sein, bevorzugt ist 2 bis 500, insbesondere 2 bis 100, besonders bevorzugt 5 bis 100.

Zu den Monomeren (B) gehören beispielsweise die folgenden Ester und Amide der Acrylsäure und Methacrylsäure: Phenyl, Benzyl, Tolyl, 2-Phenoxyethyl, Phenethyl.

Weitere Monomere (B) sind vinylaromatische Monomere wie Styrol und seine Derivate wie beispielsweise Vinyltoluol, alpha-Methylstyrol. Bei der aromatischen Einheit kann es sich auch um Heteroaromaten handeln, wie z. B. in 1-Vinylimidazol.

Besonders bevorzugte Monomere (B) können sein: Styrol, 1-Vinylimidazol, Benzylmethacrylat, 2-Phenoxyethylmethacrylat und Phenethylmethacrylat.

Zu den Monomeren (C) gehören beispielsweise die folgenden Ester und Amide der Acrylsäure und Methacrylsäure: Hexyl-, 2-Ethylhexyl-, 3,3-Dimethylbutyl-, Heptyl-, Oktyl-, Isooctyl-, Nonyl-, Lauryl-, Cetyl-, Stearyl-, Behenyl-, Cyclohexyl-, Trimethylcyclohexyl-, t-Butylcyclohexyl-, Bornyl-, Isobornyl-, Adamantyl-, (2,2-Dimethyl-1-methyl)propyl-, Cyclopentyl-, 4-Ethyl-cyclohexyl-, 2-Ethoxyethyl-, Tetrahydrofurfuryl- und Tetrahydropyranyl.

Bevorzugte Monomere (C) sind die folgenden Alkyl-Ester bzw. Alkyl-Amide der Acrylsäure und Methacrylsäure: 2-Ethoxyethyl-, Myristyl-, Octadecyl- und besonders bevorzugt 2-Ethylhexyl- und Lauryl-.

Die erfindungsgemäßen Copolymere besitzen ein Molekulargewicht von 10³ g/mol bis 10⁹ g/mol, besonders bevorzugt von 10³ bis 10⁷ g/mol, insbesondere bevorzugt 10³ bis 10⁵ g/mol.

Eine wesentliche Eigenschaft, die die erfindungsgemäßen Polymere auszeichnet, ist, dass es sich bei den Polyalkylenglykol-Seitenketten des Polymers nicht um reine Polyethylenglykole oder Polypropylenglykole handelt. Stattdessen sind die Polyalkylenglykole entweder statistische oder blockartige Polyalkylenglykole aus Propylenoxid- und Ethylenoxid-Einheiten. Erst die Feinabstimmung dieses EO/PO-Verhältnisses ermöglicht polymere Dispergiermittel, die zum Herstellen von hochkonzentrierten Pigmentdispersionen mit niedriger Viskosität geeignet sind. Durch die optimierten Verhältnisse des EO/PO-Anteils im Monomer (A) in Kombination mit den aromatischen und aliphatischen Monomeren (B) und (C) gelingt es, die Eigenschaften von novolakartigen Dispergiermitteln so nachzubilden, dass ein sehr ähnliches Eigenschaftsprofil erhalten wird.

Im Unterschied zu den aus dem Stand der Technik vorgeschlagenen Polymeren enthalten die erfindungsgemäßen Polymere keine Monomere mit freien Carboxylatgruppen. Im Gegensatz zu den erfindungsgemäßen Polymeren sind Polymere mit Carboxylatgruppen am Polymerrückgrat nicht für die Herstellung von Pigmentdispersionen mit hohen Konzentrationen an organischen Pigmenten von über 40 % geeignet, da sie zu hohen Viskositäten führen.

Die Herstellung der erfindungsgemäßen Copolymere kann mittels radikalischer Polymerisation gemäß anspruch 9 erfolgen. Die Polymerisationsreaktion kann kontinuierlich, diskontinuierlich oder semi-kontinuierlich durchgeführt werden. Die Polymerisationsreaktion wird vorteilhafterweise als Fällungspolymerisation, Emulsionspolymerisation, Lösungspolymerisation, Substanzpolymerisation oder Gelpolymerisation geführt. Besonders vorteilhaft für das Eigenschaftsprofil der erfindungsgemäßen Copolymere ist die Lösungspolymerisation.

Als Lösungsmittel für die Polymerisationsreaktion können alle organischen oder anorganischen Lösungsmittel dienen, die sich bezüglich radikalischer Polymerisationsreaktionen weitestgehend inert verhalten, beispielsweise Ethylacetat, n-Butylacetat oder 1-Methoxy-2-propylacetat, sowie Alkohole wie z. B. Ethanol, i-Propanol, n-Butanol, 2-Ethylhexanol oder 1-Methoxy-2-propanol, ebenfalls Diole wie Ethylenglykol und Propylenglykol. Auch können Ketone wie Aceton, Butanon, Pentanon, Hexanon und Methylethylketon, Alkylester der Essig-, Propion- und Buttersäure wie beispielsweise Ethylacetat, Butylacetat und Amylacetat, Ether wie Tetrahydrofuran, Diethylether und Ethylenglykol- und Polyethylenglykol-monoalkylether und -dialkylether verwendet werden. Ebenso können aromatische Lösungsmittel wie z. B. Toluol, Xylol oder höher siedende Alkylbenzole eingesetzt werden. Ebenfalls ist der Einsatz von Lösungsmittelgemischen denkbar, wobei sich die Wahl des Lösungsmittels oder der Lösungsmittel nach dem Einsatzzweck des erfindungsgemäßen Copolymeren richtet. Bevorzugt Verwendung finden Wasser; niedere Alkohole; bevorzugt Methanol, Ethanol, Propanole, iso-, sec.- und t-Butanol, 2-Ethylhexanol, Butylglykol und Butyldiglykol, insbesondere bevorzugt iso-Propanol, t-Butanol, 2-Ethylhexanol, Butylglykol und Butyldiglykol; Kohlenwasserstoffe mit 5 bis 30 Kohlenstoffatomen und Mischungen und Emulsionen der vorgenannten Verbindungen.

Die Polymerisationsreaktion erfolgt bevorzugt im Temperaturbereich zwischen 0 und 180 °C, besonders bevorzugt zwischen 10 und 100 °C, sowohl bei Normaldruck als auch unter erhöhtem oder erniedrigtem Druck. Gegebenenfalls kann die Polymerisation auch unter einer Schutzgasatmosphäre, vorzugsweise unter Stickstoff, ausgeführt werden.

Zur Auslösung der Polymerisation können energiereiche, elektromagnetische Strahlen, mechanische Energie oder die üblichen, chemischen Polymerisationsinitiatoren wie organische Peroxide, z. B. Benzoylperoxid, tert.-Butylhydroperoxid, Methylethylketon-peroxid, Cumoylperoxid, Dilauroylperoxid (DLP) oder Azoinitiatoren, wie z. B. Azodiisobutyronitril (AIBN), Azobisamidopropyl-hydrochlorid (ABAH) und 2,2'-Azobis(2-methylbutyronitril) (AMBN) verwendet werden. Ebenfalls geeignet sind anorganische Peroxyverbindungen, wie z. B. (NH₄)₂S₂O₈, K₂S₂O₈ oder H₂O₂, gegebenenfalls in Kombination mit Reduktionsmitteln (z. B. Natriumhydrogensulfit, Ascorbinsäure, Eisen(II)sulfat) oder Redoxsystemen, welche als reduzierende Komponente eine aliphatische oder aromatische Sulfonsäure (z. B. Benzolsulfonsäure, Toluolsulfonsäure) enthalten.

Als Molekulargewichtsregler kommen die üblichen Verbindungen zum Einsatz. Geeignete bekannte Regler sind z. B. Alkohole, wie Methanol, Ethanol, Propanol, Isopropanol, n-Butanol, sec.-Butanol und Amylalkohole, Aldehyde, Ketone, Alkylthiole, wie z. B. Dodecylthiol und tert.-Dodecylthiol, Thioglykolsäure, Isooctylthioglykolat und einige Halogenverbindungen, wie z. B. Tetrachlorkohlenstoff, Chloroform und Methylenchlorid.

Ein weiterer Gegenstand der vorliegenden Erfindung ist die Verwendung gemäß Ansprüche 10 und 11 des erfindungsgemäßen Copolymers als Dispergiermittel, insbesondere für Pigmente und Füllstoffe, z. B. bei der Herstellung von wasserbasierenden Pigmentkonzentraten, die zum Einfärben von Dispersions- und Lackfarben, Anstrichmitteln, Beschichtungsstoffen und Druckfarben verwendet werden, sowie zum Einfärben von Papier, Kartonagen und Textilien.

### Synthesebeispiel 1

In einem Kolben mit Rührer, Rückflusskühler, Innenthermometer und Stickstoffeinleitung wurden 258 g Polyalkylenglykolmonomethacrylat (Molmasse 750, molares EO/PO-Verhältnis 6,3), 136,4 g 2-Ethylhexylmethacrylat, 71,6 g Styrol und 16,5 g 1-Dodecanthiol in 660 ml tert. Butanol unter Stickstoffeinleitung vorgelegt.. Dann wurde unter Rühren auf eine Temperatur von 80 °C aufgeheizt. Nach Erreichen der Reaktionstemperatur wurde 16,5 g des Initiators AMBN, gelöst in 130 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 15.100 g/mol (nach GPC, Referenz: Polyethylenglykol).

### Synthesebeispiel 2

In einem Kolben mit Rührer, Rückflusskühler, Innenthermometer und Stickstoffeinleitung wurden 210 g Polyalkylenglykolmonomethacrylat (Molmasse 350, molares EO/PO-Verhältnis 1,7), 79,2 g 2-Ethylhexylmethacrylat, 41,6 g Styrol und 13,4 g 1-Dodecanthiol in 470 ml tert. Butanol unter Stickstoffeinleitung vorgelegt. Dann wurde unter Rühren auf eine Temperatur von 80 °C aufgeheizt. Nach Erreichen der Reaktionstemperatur wurde 13,4 g des Initiators AMBN, gelöst in 95 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 6.900 g/mol (nach GPC, Referenz: Polyethylenglykol).

### Synthesebeispiel 3

In einem Kolben mit Rührer, Rückflusskühler, Innenthermometer und Stickstoffeinleitung wurden 258 g Polyalkylenglykolmonomethacrylat (Molmasse 750, molares EO/PO-Verhältnis 6,3), 87,5 g Laurylmethacrylat, 35,8 g Styrol und 9,9 g 1-Dodecanthiol in 530 ml tert. Butanol unter Stickstoffeinleitung vorgelegt. Dann wurde unter Rühren auf eine Temperatur von 80 °C aufgeheizt. Nach Erreichen der Reaktionstemperatur wurde 9,9 g des Initiators AMBN, gelöst in 110 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 14.000 g/mol (nach GPC, Referenz: Polyethylenglykol).

### Synthesebeispiel 4

In einem Kolben mit Rührer, Rückflusskühler, Innenthermometer und Stickstoffeinleitung wurden 210 g Polyalkylenglykolmonomethacrylat (Molmasse 350, molares EO/PO-Verhältnis 1,7), 101,6 g Laurylmethacrylat, 41,6 g Styrol und 13,4 g 1-Dodecanthiol in 500 ml tert. Butanol unter Stickstoffeinleitung vorgelegt. Dann wurde unter Rühren auf eine Temperatur von 80 °C aufgeheizt. Nach Erreichen der Reaktionstemperatur wurde 13,4 g des Initiators AMBN, gelöst in 100 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 7.700 g/mol (nach GPC, Referenz: Polyethylenglykol).

### Synthesebeispiel 5

In einem Kolben mit Rührer, Rückflusskühler, Innenthermometer und Stickstoffeinleitung wurden 363 g Polyalkylenglykolmonomethacrylat (Molmasse 1.100, molares EO/PO-Verhältnis 10,2, 70 %ig in t-Butanol), 117,3 g Laurylmethacrylat, 48,0 g Styrol und 11,1 g 1-Dodecanthiol in 730 ml tert. Butanol unter Stickstoffeinleitung vorgelegt. Dann wurde unter Rühren auf eine Temperatur von 80 °C aufgeheizt. Nach Erreichen der Reaktionstemperatur wurde 11,1 g des Initiators AMBN, gelöst in 150 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 22.000 g/mol (nach GPC, Referenz: Polyethylenglykol).

### Synthesebeispiel 6

In einem Kolben mit Rührer, Rückflusskühler, Innenthermometer und Stickstoffeinleitung wurden 452 g Polyalkylenglykolmonomethacrylat (Molmasse 2.000, molares EO/PO-Verhältnis 20,5, 70 %ig in t-Butanol), 80,4 g Laurylmethacrylat, 32,9 g Styrol und 7,6 g 1-Dodecanthiol in 780 ml tert. Butanol unter Stickstoffeinleitung vorgelegt. Dann wurde unter Rühren auf eine Temperatur von 80 °C aufgeheizt. Nach Erreichen der Reaktionstemperatur wurde 7,6 g des Initiators AMBN, gelöst in 160 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 30.500 g/mol (nach GPC, Referenz: Polyethylenglykol).

### Synthesebeispiel 7

In einem Kolben mit Rührer, Rückflusskühler, Innenthermometer und Stickstoffeinleitung wurden 210 g Polyalkylenglykolmonomethacrylat (Molmasse 350, molares EO/PO-Verhältnis 1,7), 202,8 g Stearylmethacrylat, 62,4 g Styrol und 11,5 g 1-Dodecanthiol in 660 ml tert. Butanol unter Stickstoffeinleitung vorgelegt. Dann wurde unter Rühren auf eine Temperatur von 80 °C aufgeheizt. Nach Erreichen der Reaktionstemperatur wurde 11,5 g des Initiators AMBN, gelöst in 130 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 8.100 g/mol (nach GPC, Referenz: Polyethylenglykol).

### Synthesebeispiel 8

In einem Kolben mit Rührer, Rückflusskühler, Innenthermometer und Stickstoffeinleitung wurden 258 g Polyalkylenglykolmonomethacrylat (Molmasse 750, molares EO/PO-Verhältnis 6,3), 38,2 g Isobornylmethacrylat, 30,3 g Benzylmethacrylat und 13,2 g 1-Dodecanthiol in 470 ml tert. Butanol unter Stickstoffeinleitung vorgelegt. Dann wurde unter Rühren auf eine Temperatur von 80 °C aufgeheizt. Nach Erreichen der Reaktionstemperatur wurde 13,2 g des Initiators AMBN, gelöst in 100 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 15.000 g/mol (nach GPC, Referenz: Polyethylenglykol).

### Synthesebeispiel 9

In einem Kolben mit Rührer, Rückflusskühler, Innenthermometer und Stickstoffeinleitung wurden 363 g Polyalkylenglykolmonomethacrylat (Molmasse 1.100, molares EO/PO-Verhältnis 10,2, 70 % in t-Butanol), 39,3 g Tetrahydrofurfurylmethacrylat, 87,8 g Phenethylmethacrylat und 8,9 g 1-Dodecanthiol in 670 ml tert. Butanol unter Stickstoffeinleitung vorgelegt. Dann wurde unter Rühren auf eine Temperatur von 80 °C aufgeheizt. Nach Erreichen der Reaktionstemperatur wurde 8,9 g des Initiators AMBN, gelöst in 130 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 25.800 g/mol (nach GPC, Referenz: Polyethylenglykol).

### Synthesebeispiel 10

In einem Kolben mit Rührer, Rückflusskühler, Innenthermometer und Stickstoffeinleitung wurden 452 g Polyalkylenglykolmonomethacrylat (Molmasse 2.000, molares EO/PO-Verhältnis 20,5, 70 %ig in t-Butanol), 25,0 g 2-Ethoxyethylmethacrylat, 29,7 g 1-Vinylimidazol und 6,1 g 1-Dodecanthiol in 700 ml tert. Butanol unter Stickstoffeinleitung vorgelegt. Dann wurde unter Rühren auf eine Temperatur von 80 °C aufgeheizt. Nach Erreichen der Reaktionstemperatur wurde 6,1 g des Initiators AMBN, gelöst in 140 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 26.000 g/mol (nach GPC, Referenz: Polyethylenglykol).

### Synthesebeispiel 11

In einem Kolben mit Rührer, Rückflusskühler, Innenthermometer und Stickstoffeinleitung wurden 210 g Polyalkylenglykolmonomethacrylat (Molmasse 350, molares EO/PO-Verhältnis 1,7), 69,0 g Laurylacrylat, 52,8 g Benzylmethacrylat und 15,3 g 1-Dodecanthiol in 480 ml tert. Butanol unter Stickstoffeinleitung vorgelegt. Dann wurde unter Rühren auf eine Temperatur von 80 °C aufgeheizt. Nach Erreichen der Reaktionstemperatur wurde 15,3 g des Initiators AMBN, gelöst in 100 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 7.700 g/mol (nach GPC, Referenz: Polyethylenglykol).

### Synthesebeispiel 12

In einem Kolben mit Rührer, Rückflusskühler, Innenthermometer und Stickstoffeinleitung wurden 258 g Polyalkylenglykolmonomethacrylat (Molmasse 750, molares EO/PO-Verhältnis 6,3), 38,2 g 1-Vinyl-2-pyrrolidon, 107,3 g Styrol und 16,5 g 1-Dodecanthiol in 580 ml tert. Butanol unter Stickstoffeinleitung vorgelegt. Dann wurde unter Rühren auf eine Temperatur von 80 °C aufgeheizt. Nach Erreichen der Reaktionstemperatur wurde 16,5 g des Initiators AMBN, gelöst in 120 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 12.100 g/mol (nach GPC, Referenz: Polyethylenglykol).

### Synthesebeispiel 13

In einem Kolben mit Rührer, Rückflusskühler, Innenthermometer und Stickstoffeinleitung wurden 452 g Polyalkylenglykolmonomethacrylat (Molmasse 2.000, molares EO/PO-Verhältnis 20,5, 70 %ig in t-Butanol), 31,3 g 2-Ethylhexylmethacrylat, 27,8 g Benzylmethacrylat und 4,6 g 1-Dodecanthiol in 700 ml tert. Butanol unter Stickstoffeinleitung vorgelegt. Dann wurde unter Rühren auf eine Temperatur von 80 °C aufgeheizt. Nach Erreichen der Reaktionstemperatur wurde 4,6 g des Initiators AMBN, gelöst in 140 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 27.000 g/mol (nach GPC, Referenz: Polyethylenglykol).

### Synthesebeispiel 14

In einem Kolben mit Rührer, Rückflusskühler, Innenthermometer und Stickstoffeinleitung wurden 363 g Polyalkylenglykolmonomethacrylat (Molmasse 1.100, molares EO/PO-Verhältnis 10,2, 70% in t-Butanol), 58,7 g Laurylmethacrylat, 43,9 g Phenethylmethacrylat und 6,7 g 1-Dodecanthiol in 630 ml tert. Butanol unter Stickstoffeinleitung vorgelegt. Dann wurde unter Rühren auf eine Temperatur von 80 °C aufgeheizt. Nach Erreichen der Reaktionstemperatur wurde 6,7 g des Initiators AMBN, gelöst in 130 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 23.000 g/mol (nach GPC, Referenz: Polyethylenglykol).

### Synthesebeispiel 15

In einem Kolben mit Rührer, Rückflusskühler, Innenthermometer und Stickstoffeinleitung wurden 258 g Polyalkylenglykolmonomethacrylat (Molmasse 750, molares EO/PO-Verhältnis 6,3), 116,3 g Stearylmethacrylat, 70,9 g 2-Phenoxyethylmethacrylat und 9,9 g 1-Dodecanthiol in 620 ml tert. Butanol unter Stickstoffeinleitung vorgelegt. Dann wurde unter Rühren auf eine Temperatur von 80 °C aufgeheizt. Nach Erreichen der Reaktionstemperatur wurde 9,9 g des Initiators AMBN, gelöst in 120 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 11.200 g/mol (nach GPC, Referenz: Polyethylenglykol).

### Synthesebeispiel 16

In einem Kolben mit Rührer, Rückflusskühler, Innenthermometer und Stickstoffeinleitung wurden 210 g Polyalkylenglykolmonomethacrylat (Molmasse 350, molares EO/PO-Verhältnis 0,43), 72,0 g Laurylacrylat, 52,8 g Benzylmethacrylat und 11,1 g 1-Dodecanthiol in 480 ml tert. Butanol unter Stickstoffeinleitung vorgelegt. Dann wurde unter Rühren auf eine Temperatur von 80 °C aufgeheizt. Nach Erreichen der Reaktionstemperatur wurde 11,1 g des Initiators AMBN, gelöst in 100 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 8400 g/mol (nach GPC, Referenz: Polyethylenglykol).

### Synthesebeispief 17

In einem Kolben mit Rührer, Rückflusskühler, Innenthermometer und Stickstoffeinleitung wurden 258 g Polyalkylenglykolmonomethacrylat (Molmasse 750, molares EO/PO-Verhältnis 0,22), 87,5 g Laurylmethacrylat, 35,8 g Styrol und 9,9 g 1-Dodecanthiol in 530 ml tert. Butanol unter Stickstoffeinleitung vorgelegt. Dann wurde unter Rühren auf eine Temperatur von 80 °C aufgeheizt. Nach Erreichen der Reaktionstemperatur wurde 9,9 g des Initiators AMBN, gelöst in 110 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 10.700 g/mol (nach GPC, Referenz: Polyethylenglykol).

### Synthesebeispiel 18

In einem Kolben mit Rührer, Rückflusskühler, Innenthermometer und Stickstoffeinleitung wurden 363 g Polyalkylenglykolmonomethacrylat (Molmasse 1.100, molares EO/PO-Verhältnis 0,30, 70 % in t-Butanol), 58,7 g Laurylmethacrylat, 43,9 g Phenethylmethacrylat und 6,7 g 1-Dodecanthiol in 630 ml tert. Butanol unter Stickstoffeinleitung vorgelegt. Dann wurde unter Rühren auf eine Temperatur von 80 °C aufgeheizt. Nach Erreichen der Reaktionstemperatur wurde 6,7 g des Initiators AMBN, gelöst in 130 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 24.000 g/mol (nach GPC, Referenz: Polyethylenglykol).

### Synthesebeispiel 19

In einem Kolben mit Rührer, Rückflusskühler, Innenthermometer und Stickstoffeinleitung wurden 388 g Polyalkylenglykolmonomethacrylat (Molmasse 750, molares EO/PO-Verhältnis 6,3), 68,2 g 2-Ethylhexylmethacrylat, 35,8 g Styrol und 11,6 g 1-Dodecanthiol in 660 ml tert. Butanol unter Stickstoffeinleitung vorgelegt. Dann wurde unter Rühren auf eine Temperatur von 80 °C aufgeheizt. Nach Erreichen der Reaktionstemperatur wurde 11,6 g des Initiators AMBN, gelöst in 130 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 15.000 g/mol (nach GPC, Referenz: Polyethylenglykol).

### Synthesebeispiel 20

In einem Kolben mit Rührer, Rückflusskühler, Innenthermometer und Stickstoffeinleitung wurden 517 g Polyalkylenglykolmonomethacrylat (Molmasse 750, molares EO/PO-Verhältnis 6,3), 68,2 g 2-Ethylhexylmethacrylat, 35,8 g Styrol und 13,2 g 1-Dodecanthiol in 470 ml tert. Butanol unter Stickstoffeinleitung vorgelegt. Dann wurde unter Rühren auf eine Temperatur von 80 °C aufgeheizt. Nach Erreichen der Reaktionstemperatur wurde 13,2 g des Initiators AMBN, gelöst in 100 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 10.000 g/mol (nach GPC, Referenz: Polyethylenglykol).

### Synthesebeispiel 21

In einem Kolben mit Führer, Rückflusskühler, Innenthermometer und Stickstoffeinteitung wurden 280 g Polyalkylenglykolmonomethacrylat (Molmasse 350, molares EO/PO-Verhältnis 1,7), 79,2 g 2-Ethylhexylmethacrylat, 41,6 g Styrol und 15,3 g 1-Dodecanthiol in 480 ml tert. Butanol unter Stickstoffeinleitung vorgelegt. Dann wurde unter Rühren auf eine Temperatur von 80 °C aufgeheizt. Nach Erreichen der Reaktionstemperatur wurde 15,3 g des Initiators AMBN, gelöst in 100 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 13.500 g/mol (nach GPC, Referenz: Polyethylenglykol).

### Synthesebeispiel 22

In einem Kolben mit Rührer, Rückflusskühler, Innenthermometer und Stickstoffeinleitung wurden 387 g Polyalkylenglykolmonomethacrylat (Molmasse 750, molares EO/PO-Verhältnis 6,3), 87,5 g Laurylmethacrylat, 35,8 g Styrol und 11,6 g 1-Dodecanthiol in 660 ml tert. Butanol unter Stickstoffeinleitung vorgelegt. Dann wurde unter Rühren auf eine Temperatur von 80 °C aufgeheizt. Nach Erreichen der Reaktionstemperatur wurde 11,6 g des Initiators AMBN, gelöst in 130 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 9.700 g/mol (nach GPC, Referenz: Polyethylenglykol).

### Synthesebeispiel 23

In einem Kolben mit Rührer, Rückflusskühler, Innenthermometer und Stickstoffeinleitung wurden 267 g Polyalkylenglykolmonomethacrylat (Molmasse 350, molares EO/PO-Verhältnis 1,7), 101,6 g Laurylmethacrylat, 41,6 g Styrol und 15,3 g 1-Dodecanthiol in 480 ml tert. Butanol unter Stickstoffeinleitung vorgelegt. Dann wurde unter Rühren auf eine Temperatur von 80 °C aufgeheizt. Nach Erreichen der Reaktionstemperatur wurde 15,3 g des Initiators AMBN, gelöst in 100 ml Isobutanol, innerhalb 1 Stunde zudosiert. Anschließend wurde noch weitere 5 Stunden bei dieser Temperatur gerührt. Nach dem Abkühlen auf Raumtemperatur wurde das Lösungsmittel im Vakuum entfernt. Molmasse des erhaltenen Polymers M_{w} = 12.000 g/mol (nach GPC, Referenz: Polyethylenglykol).

### Vergleichs-Synthesebeispiel 1:

Copolymer nach DE 10 2005 019 384, Beispiel 1

In einem 1-Liter-Dreihalskolben, welcher mit einem Thermometer, einem Stickstoffanschluss sowie einem Intensivkühler versehen war, wurden 291,8 g Styrol, 603,3 g Methacrylsäure sowie 209,8 g Methoxypolyethylenglykolmethacrylat (1.000 g/mol) (MPEG 1000 MA) (50 % in Wasser) unter Rühren in Tetrahydrofuran gelöst. Dann wurden 30,2 g Dibenzoylperoxid (75 % in Wasser) zugegeben und der Kolbeninhalt unter leichtem Stickstöffstrom auf 65 °C temperiert. Die Mischung wurde für 18 Stunden unter Rückfluss erhitzt. Anschließend wurde auf etwa Raumtemperatur abgekühlt. Unter starkem Rühren wurden portionsweise 73,75 g festes NaOH sowie 1,25 L entionisiertes Wasser zugegeben. Nachdem der Kolbeninhalt wieder gelöst war, wurde Tetrahydrofuran, Wasser sowie nicht umgesetztes Styrol unter reduziertem Druck abdestilliert. Der Druck wurde dabei so gewählt, dass die Temperatur der Mischung 40 °C nicht überstieg. Die eingeengte Polymerlösung wurde mit Wasser auf einen Feststoffgehalt von ca. 33 Gew.-% eingestellt.

### Anwendungsbeispiel

### Herstellung einer Pigmentpräparation

Das Pigment wurde, entweder als Pulver, Granulat oder als Presskuchen, zusammen mit den Dispergiermitteln und den anderen Zusätzen in entionisiertem Wasser angeteigt und dann mit einem Dissolver (z. B. von der Firma VMA-Getzmann GmbH, Type AE3-M1) oder einer anderen geeigneten Apparatur homogenisiert und vordispergiert. Die anschließende Feindispergierung erfolgte mit Hilfe einer Perlmühle (z. B. mit AE3-M1 von VMA-Getzmann) oder aber einem anderen geeigneten Dispergieraggregat, wobei die Mahlung mit Siliquarzitperlen oder Zirkonmischoxidperlen der Größe d = 1 mm unter Kühlung bis zur gewünschten Farbstärke und Coloristik erfolgte. Im Anschluss wurde die Dispersion mit entionisiertem Wasser auf die gewünschte Pigmentendkonzentration eingestellt, die Mahlkörper abgetrennt und die Pigmentpräparation isoliert.

### Beurteilung einer Pigmentpräparation

Die Bestimmung der Farbstärke und des Farbtons erfolgte nach DIN 55986. Für den "Rub-Out-Test" wurde die Dispersionsfarbe nach Mischen mit der Pigmentdispersion auf eine Lackkarte aufgetragen. Anschließend wurde mit dem Finger auf dem unteren Teil der Lackkarte nachgerieben. Unverträglichkeit lag vor, wenn die nachgeriebene Fläche dann kräftiger gefärbt ist als die angrenzende, nicht nachbehandelte Fläche (der "Rub-Out-Test" wird in DE 2 638 946 beschrieben). Die Farbstärke und die Verträglichkeiten mit dem einzufärbenden Medium wurde mit einer Dispersionsfarbe für Außenanstriche ermittelt (Wasserbasis, 20 % TiO₂).

Die Viskosität wurde mit einem Kegel-Platte-Viskosimeter (Roto Visco 1) der Firma Haake bei 20 °C bestimmt (Titankegel: Ø 60 mm, 1°), wobei die Abhängigkeit der Viskosität von dem Schergefälle in einem Bereich zwischen 0 und 200 s⁻¹ untersucht wurde. Die Viskositäten wurden bei einem Schergefälle von 60 s⁻¹ gemessen.
Für eine Beurteilung der Lagerstabilität der Dispersionen wurde die Viskosität direkt nach der Herstellung der Präparation gemessen, sowie nach vierwöchiger Lagerung bei 50 °C.

Die in dem folgenden Beispiel beschriebene Pigmentpräparation wurde nach dem zuvor beschriebenen Verfahren hergestellt, wobei die folgenden Bestandteile in den angegebenen Mengen so verwendet wurden, dass 100 Teile der Pigmentpräparation entstehen. In dem nachfolgenden Beispiel bedeuten Teile Gewichtsteile:
- 50,0 Teile: C.I. Pigment Blau 15
- 7,0 Teile: Polymer aus Synthesebeispiel 19
- 2,0 Teile: Benetzer
- 8,0 Teile: Ethylenglykol
- 0,2 Teile: Konservierungsmittel
- 32,8 Teile: Wasser

Die Pigmentpräparation hat in der Weißdispersion eine hohe Farbstärke und ist stabil. Der Rub-Out-Test zeigt keine Farbstärkeunterschiede im Vergleich zur nachgeriebenen Fläche. Die Dispersion erweist sich als gut fließfähig und lagerstabil, da sie nach 28 Tagen Lagerung bei 50 °C ebenfalls noch gut fließfähig ist. Die Viskosität beträgt am Ende der Herstellung 642 mPa·s.

## Patentansprüche

1. Copolymer, erhältlich durch Polymerisation der Monomere (A), (B) und (C),
wobei
(A) ein Monomer der Formel (I) 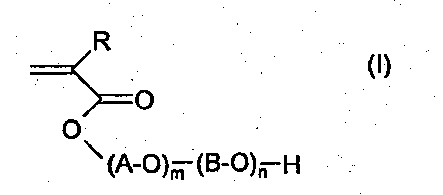 wobei
A für C₂- bis C4-Alkylen und
B für ein von A unterschiedliches C₂- bis C₄-Alkylen steht,
R für Wasserstoff oder Methyl steht,
m eine Zahl von 1 bis 500 ist;
n eine Zahl von 1 bis 500 ist,
wobei die Summe m + n gleich 2 bis 1.000 ist;
(B) ein ethylenisch ungesättigtes Monomer ist, das eine aromatische Gruppe enthält und eine Verbindung der Formel (IIa) oder (IIb) ist: 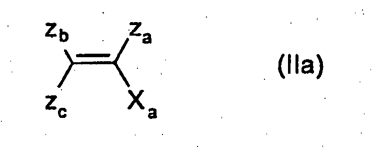 wobei
Xₐ für einen aromatischen oder araliphatischen Rest mit 3 bis 30 C-Atomen steht, der gegebenenfalls eines oder mehrere der Heteroatome N, O und S enthält,
Zₐ für H oder (C₁-C₄)-Alkyl steht,
Z_{b} für H oder (C₁-C₄)-Alkyl steht, und
Z_{c} für H oder (C₁-C₄)-Alkyl steht; 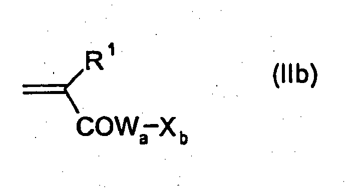
wobei
R¹ für Wasserstoff oder Methyl steht,
X_{b} für einen aromatischen oder araliphatischen Rest mit 3 bis 30 C-Atomen steht, der gegebenenfalls eines oder mehrere der Heteroatome N, O und S enthält,
Wₐ für Sauerstoff oder die Gruppe NH steht.
(C) ein ethylenisch ungesättigtes Monomer ist, das einen Alkylrest enthält und eine Verbindung der Formel (III) ist: 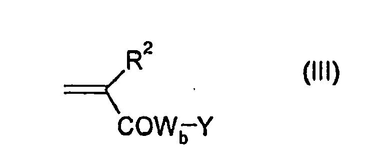 wobei
R² für Wasserstoff oder Methyl steht,
Y für einen aliphatischen Kohlenwasserstoffrest mit 6 bis 30 C-Atomen, steht, der linear oder verzweigt, oder auch cyclisch sein kann, und die Heteroatome O, N und/oder S enthalten kann und auch ungesättigt sein kann,
W_{b} für Sauerstoff oder die Gruppe NH steht.

2. Copolymer nach Anspruch 1, **dadurch gekennzeichnet, dass** der molare Anteil von Monomer (A) 1 bis 80 %, von Monomer (B) 0,1 bis 80%, und von Monomer (C) 0,1 bis 80 % beträgt.

3. Copolymer nach Anspruch 1 oder 2, **dadurch gekennzeichnet, dass** der molare Anteil von Monomer (A) 10 bis 70 %, von Monomer (B) 10 bis 60 %, und von Monomer (C) 10 bis 60 % beträgt.

4. Copolymer nach einem oder mehreren der Ansprüche 1 bis 3, **dadurch gekennzeichnet, dass** die Alkylenoxideinheiten (A-O)ₘ und (B-O)ₙ blockartig angeordnet sind.

5. Copolymer nach einem oder mehreren der Ansprüche 1 bis 4, **dadurch gekennzeichnet, dass** (A-O)ₘ für Propylenoxid-Einheiten und (B-O)ₙ für Ethylenoxid-Einheiten, oder (A-O)ₘfür Ethylenoxid-Einheiten und (B-O)ₙ für Propylenoxid-Einheiten stehen, wobei der molare Anteil der Ethylenoxid-Einheiten 50 bis 98 %, bezogen auf die Summe der Ethylenoxid- und Propylenoxid-Einheiten beträgt.

6. Copolymer nach Anspruch 5, **dadurch gekennzeichnet, dass** der molare Anteil der Ethylenoxid-Einheiten 60 bis 95 %, bezogen auf die Summe der Ethylenoxid- und Propylenoxid-Einheiten, beträgt.

7. Copolymer nach einem oder mehreren der Ansprüche 1 bis 6, **dadurch gekennzeichnet, dass** das Monomer (B) Styrol, 1-Vinylimidazol, Benzylmethacrylat, 2-Phenoxyethylmethacrylat oder Phenethylmethacrylat ist.

8. Copolymer nach einem oder mehreren der Ansprüche 1 bis 7, **dadurch gekennzeichnet, dass** das Monomer (C) ein Alkylester oder Alkylamid der Acryl- oder Methacrylsäure ist, wobei Alkyl die Bedeutung 2-Ethylhexyl, 2-Ethoxyethyl, Myristyl, Lauryl und Octadecyl hat.

9. Verfahren zur Herstellung eines Copolymers nach einem oder mehreren der Ansprüche 1 bis 8, wobei die Monomere (A), (B) und (C) radikalisch polymerisiert werden.

10. Verwendung eines Copolymers nach einem oder mehreren der Ansprüche 1 bis 8 als Dispergiermittel.

11. Verwendung nach Anspruch 10 als Dispergiermittel für Pigmente und Füllstoffe.

## Claims

1. A copolymer obtainable by polymerization of monomers (A), (B) and (C), where
(A) is a monomer of formula (I) 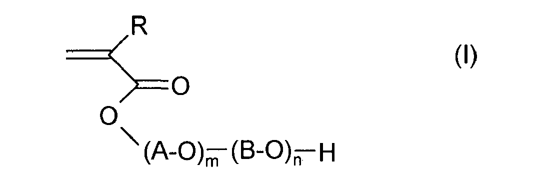 where
A represents C₂- to C₄-alkylene,
B represents a C₂- to C₄-alkylene other than A,
R represents hydrogen or methyl,
m is from 1 to 500;
n is from 1 to 500,
and the sum total of m + n is from 2 to 1000;
(B) is an ethylenically unsaturated monomer which contains an aromatic group and is a compound of formula (IIa) or (IIb): 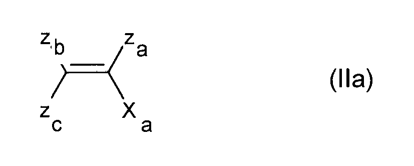 where
Xₐ represents an aromatic or araliphatic radical having 3 to 30 carbon atoms which optionally contains one or more of the hetero atoms N, O and S,
Zₐ represents H or (C₁-C₄) -alkyl,
Z_{b} represents H or (C₁-C₄)-alkyl, and
Z_{c} represents H or (C₁-C₄)-alkyl; 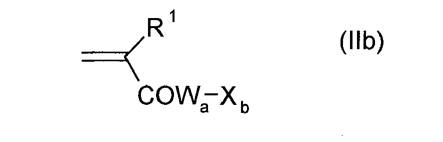
where
R¹ represents hydrogen or methyl,
X_{b} represents an aromatic or araliphatic radical having 3 to 30 carbon atoms which optionally contains one or more of the hetero atoms N, O und S,
Wₐ represents oxygen or an NH group.
(C) is an ethylenically unsaturated monomer which contains an alkyl radical and is a compound of formula (III): 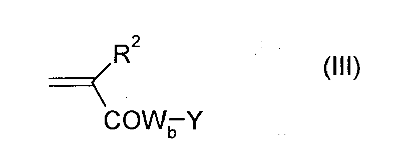 where
R² represents hydrogen or methyl,
Y represents an aliphatic hydrocarbyl radical having 6 to 30 carbon atoms, which may be linear or branched or else cyclic, and which may contain hetero atoms O, N and/or S and may also be unsaturated,
W_{b} represents oxygen or an NH group.

2. The copolymer as claimed in claim 1, wherein the molar fraction of monomer (A) is 1 to 80%, monomer (B) is 0.1 to 80% and monomer (C) is 0.1 to 80%.

3. The copolymer as claimed in claim 1 or 2, wherein the molar fraction of monomer (A) is 10 to 70%, monomer (B) is 10 to 60% and monomer (C) is 10 to 60%.

4. The copolymer as claimed in one or more of claims 1 to 3, wherein the alkylene oxide units (A-O)ₘ and (B-O)ₙ are in a blocklike arrangement.

5. The copolymer as claimed in one or more of claims 1 to 4, wherein (A-O)ₘ represents propylene oxide units and (B-O)ₙ represents ethylene oxide units, or (A-O)ₘ represents ethylene oxide units and (B-O)ₙ represents propylene oxide units, and the molar fraction of ethylene oxide units is 50 to 98%, based on the sum total of ethylene oxide and propylene oxide units.

6. The copolymer as claimed in claim 5, wherein the molar fraction of ethylene oxide units is 60 to 95%, based on the sum total of ethylene oxide and propylene oxide units.

7. The copolymer as claimed in one or more of claims 1 to 6, wherein the monomer (B) is styrene, 1-vinylimidazole, benzyl methacrylate, 2-phenoxyethyl methacrylate or phenethyl methacrylate.

8. The copolymer as claimed in one or more of claims 1 to 7, wherein the monomer (C) is an alkyl ester or alkylamide of acrylic acid or methacrylic acid, alkyl being 2-ethylhexyl, 2-ethoxyethyl, myristyl, lauryl or octadecyl.

9. A process for producing a copolymer as claimed in one or more of claims 1 to 8, which comprises free-radically polymerizing the monomers (A), (B) and (C).

10. The use of a copolymer as claimed in one or more of claims 1 to 8 as a dispersant.

11. The use as claimed in claim 10 as a dispersant for pigments and fillers.

## Revendications

1. Copolymère pouvant être obtenu par polymérisation des monomères (A), (B) et (C),
(A) étant un monomère de formule (I) 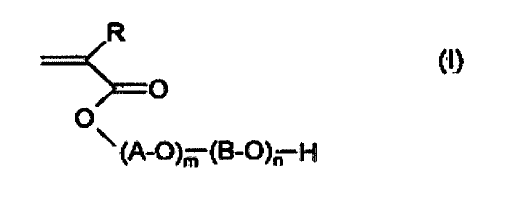 dans laquelle
A représente un alkylène en C₂ à C₄ et
B représente un alkylène en C₂ à C₄ différent de A,
R représente hydrogène ou méthyle,
m est un nombre de 1 à 500,
n est un nombre de 1 à 500,
la somme m + n étant de 2 à 1 000 ;
(B) étant un monomère éthyléniquement insaturé qui contient un groupe aromatique et étant un composé de formule (IIa) ou (IIb) 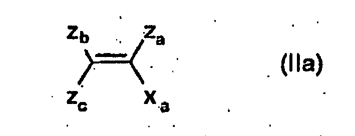 dans laquelle
Xₐ représente un radical aromatique ou araliphatique de 3 à 30 atomes C, qui contient éventuellement un ou plusieurs des hétéroatomes N, O et S,
Zₐ représente H ou alkyle en (C₁-C₄),
Z_{b} représente H ou alkyle en (C₁-C₄), et
Z_{c} représente H ou alkyle en (C₁-C₄) ; 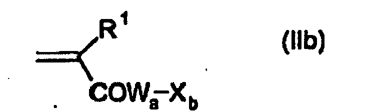
dans laquelle
R¹ représente hydrogène ou méthyle,
X_{b} représente un radical aromatique ou araliphatique de 3 à 30 atomes C qui contient éventuellement un ou plusieurs des hétéroatomes N, O et S,
Wₐ représente l'oxygène ou le groupe NH,
(C) étant un monomère éthyléniquement insaturé, qui contient un radical alkyle et étant un composé de formule (III) : 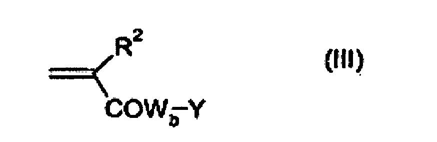 dans laquelle
R² représente hydrogène ou méthyle,
Y représente un radical hydrocarboné aliphatique de 6 à 30 atomes C qui peut être linéaire ou ramifié, ou également cyclique, et qui peut contenir les hétéroatomes O, N et/ou S et qui peut aussi être insaturé,
W_{b} représente l'oxygène ou le groupe NH.

2. Copolymère selon la revendication 1, **caractérisé en ce que** la proportion molaire est de 1 à 80 % pour le monomère (A), 0,1 à 80 % pour le monomère (B) et 0,1 à 80 % pour le monomère (C).

3. Copolymère selon la revendication 1 ou 2, **caractérisé en ce que** la proportion molaire est de 10 à 70 % pour le monomère (A), 10 à 60 % pour le monomère (B) et 10 à 60 % pour le monomère (C).

4. Copolymère selon une ou plusieurs des revendications 1 à 3, **caractérisé en ce que** les unités oxyde d'alkylène (A-O)ₘ et (B-O)ₙ sont agencées séquentiellement.

5. Copolymère selon une ou plusieurs des revendications 1 à 4, **caractérisé en ce que** (A-O)ₘ représente des unités oxyde de propylène et (B-O)ₙ des unités oxyde d'éthylène, ou (A-O)ₘ représente des unités oxyde d'éthylène et (B-O)ₙ des unités oxyde de propylène, la proportion molaire des unités oxyde d'éthylène étant de 50 à 98 %, par rapport à la somme des unités oxyde d'éthylène et oxyde de propylène.

6. Copolymère selon la revendication 5, **caractérisé en ce que** la proportion molaire des unités oxyde d'éthylène est de 60 à 95 %, par rapport à la somme des unités oxyde d'éthylène et oxyde de propylène.

7. Copolymère selon l'une ou plusieurs des revendications 1 à 6, **caractérisée en ce que** le monomère (B) est le styrène, le 1-vinylimidazole, le méthacrylate de benzyle, le méthacrylate de 2-phénoxyéthyle ou le méthacrylate de phénéthyle.

8. Copolymère selon l'une ou plusieurs des revendications 1 à 7, **caractérisé en ce que** le monomère (C) est un ester alkylique ou un alkylamide de l'acide acrylique ou de l'acide méthacrylique, alkyle signifiant 2-éthylhexyle, 2-éthoxyéthyle, myristyle, lauryle et octadécyle.

9. Procédé de fabrication d'un copolymère selon une ou plusieurs des revendications 1 à 8, selon lequel les monomères (A), (B) et (C) sont polymérisés par voie radicalaire.

10. Utilisation d'un copolymère selon une ou plusieurs des revendications 1 à 8 en tant que dispersant.

11. Utilisation selon la revendication 10 en tant que dispersant pour pigments et charges.
